(19) **Europäisches Patentamt / European Patent Office / Office européen des brevets**

(11) **EP 4 575 430 A1**

(12) # EUROPEAN PATENT APPLICATION

(43) Date of publication:
**25.06.2025 Bulletin 2025/26**

(21) Application number: **23219478.7**

(22) Date of filing: **21.12.2023**

(51) International Patent Classification (IPC):
**G01J 5/00** (2022.01)     **F24S 50/40** (2018.01)
**G01J 5/80** (2022.01)

(52) Cooperative Patent Classification (CPC):
**G01J 5/0003; F24S 50/40; G01J 5/802; G01J 5/804**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **JOHN COCKERILL RENEWABLES S.A.**
**4100 Seraing (BE)**

(72) Inventors:
• **SMOLDERS, Manuel**
  **4537 VERLAINE (BE)**

• **BAUTHIER, Thomas**
  **4280 Hannut (BE)**
• **JEUNIAUX, Pierre-Yves**
  **4053 EMBOURG (BE)**
• **REGNIER, Victor**
  **4053 EMBOURG (BE)**
• **FARINELLE, Adrien**
  **6730 TINTIGNY (BE)**

(74) Representative: **AWA Benelux**
**Parc d'affaires Zénobe Gramme - Bât. K**
**Square des Conduites d'Eau 1-2**
**4020 Liège (BE)**

(54) **SYSTEM AND METHOD FOR CALIBRATING IR CAMERAS MONITORING A SOLAR RECEIVER**

(57)     The present invention relates to a thermal mapping, calibration and monitoring system for an outdoor thermal zone of interest, comprising :
- the thermal zone of interest having a front side irradiated by a solar flux and a non-irradiated back side ;
- a plurality of IR detection cameras presenting a field of vision and located each remotely from the thermal zone of interest ;
- a weather station located on site providing weather parameters ;
- a monitoring system ; and

- communicating means between the IR detection cameras and the monitoring system ;
wherein the system comprises means to communicate raw temperatures $T_{raw}$ measured by the IR cameras on the thermal zone of interest to the monitoring system and further calibrate the measurements in the monitoring system by taking into account the atmospheric transmittance $\tau$ and also the real emittance $\varepsilon$ of the thermal zone of interest to correct the raw temperatures $T_{raw}$, before using the corrected values in further monitoring calculations.

EP 4 575 430 A1

**Description**

**Field of the invention**

The present invention relates to the technical field of concentrated solar power (CSP) plants or systems. In particular the invention relates to the thermo-mechanical monitoring of a molten salt solar receiver (MSSR) for CSP plants with central tower.

The solution disclosed in the present application is an improvement of certain aspects of the solution presented in former patent application WO 2018/177696 A1.

This solution could also be used in any application where thermo-mechanical monitoring is needed or more precisely in thermography outdoor applications where a more accurate calibration of IP cameras is needed.

The content of patent application WO 2018/177696 A1 is incorporated by reference to the present application.

**Background and Prior Art**

In the field of concentrated solar power (CSP), owing to a high thermal loading and a high level of strain in the solar receiver tubes, a thermo-mechanical monitoring is mandatory for ensuring integrity of the solar receiver surface during production. An indirect measurement is the only possible way therefore, in contrast with direct measurement (thermocouple, flux sensor, strain gauge, etc.).

In former patent application WO 2018/177696 A1, the inventors disclosed a dedicated thermo-mechanical monitoring system and method in a CSP plant comprising a heliostat field, a substantially cylindrical solar energy receiver, preferably a molten salt solar receiver (MSSR), located atop a central tower and having an external surface covered with receiver panels and a heat shield adjacent the solar receiver, the heliostats reflecting solar energy to said external surface of the receiver, each receiver panel comprising a plurality of heat exchanger tubes for transporting a heat transfer fluid, which are partly exposed on the external surface of the receiver.

The above-mentioned thermomechanical monitoring system comprises a data processing system for calculating and/or supplying respectively the maximum temperature, temperature profile and/or absorbed power profile in each heat exchanger tube and theoretical mechanical strains assigned to each heat exchanger tube as a function of the temperature provided by the imaging devices or IR cameras, in order to :

- control if the operating point of an area located on the solar receiver is within an operating envelope in the 2D-space (theoretical strain, $T_{0max}$) defining predefined temperature, in particular a maximum temperature, and strain thresholds, thereby ensuring the integrity of the solar receiver panel tubes ;

- emit alerts in the event of exceeding said predefined temperature and strain thresholds, while being outside said envelope and further to request heliostat radiation defocusing on said area, thereby controlling the heliostat field ;

- integrate the heliostat field control in a closed-loop in the next steps.

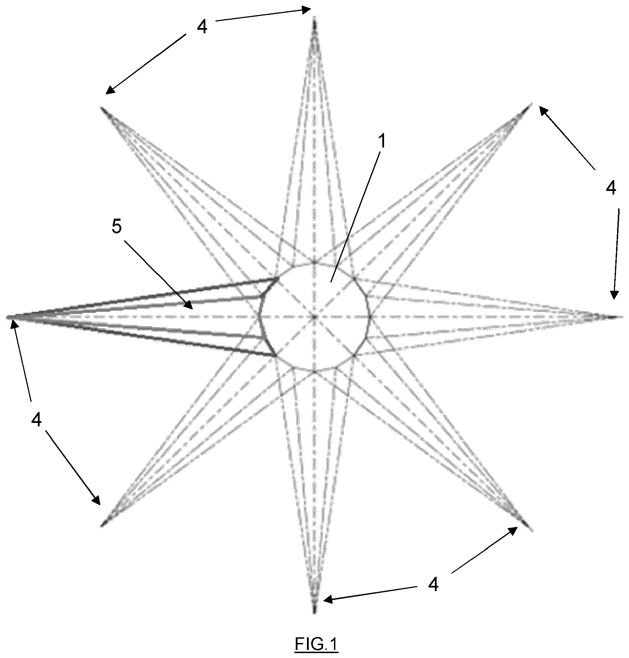

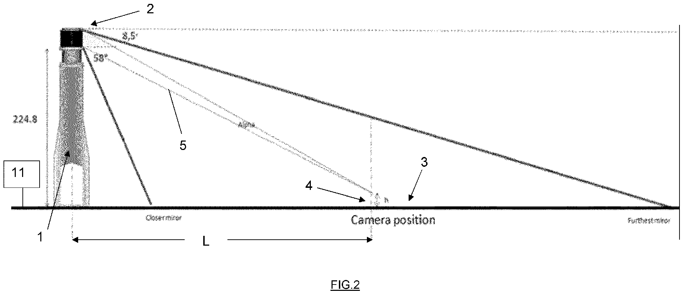

The thermo-mechanical monitoring system is based on infrared (IR) cameras 4 associated with a dedicated lens installed in a specific supporting system. The camera set 4 is located in the heliostat field 3, at ground level, and at a certain distance L from the foot of the tower that supports the solar receiver (see FIG. 1 and FIG. 2).

Further, in this prior art, a so-called *Reference Area Of Interest* (RAOI) having temperature transmitters or thermocouples is located on the solar receiver thermal shield, at the foot of the solar receiver 2 but at a height of more than 200m from ground (FIG. 2), said thermocouples being used for correcting raw temperature delivered by the IR cameras. The RAOI including temperature transmitters are used as a reference by the cameras to ideally take into consideration the atmospheric transmittance.

The RAOI (for Reference Area Of Interest) is a temperature reference zone, ideally a black body reference, for IR camera calibration preferably installed on the thermal shield of the solar receptor. A distinct RAOI zone is associated with each camera. The temperature reference is given by thermocouples, e.g. 5 thermocouples installed on each RAOI, which will provide temperature data to be compared to IR camera measurements. Calibration of IR cameras will be done by adjusting atmospheric transmissivity. This parameter is really important to consider given the large distance between the receiver and the IR cameras (more than 200m). Each RAOI element has thus to be located in front of each IR camera. Each RAOI will be similar to the tube surface in terms of material and coating. The RAOI being located on the thermal shield, it is supposed to be submitted to temperature values equivalent to that of the solar receptor tubes (500 to 700°C).

The thermo-mechanical monitoring method is also based on an IR camera dedicated software (provided by the camera supplier) and an in-house software (developed by the applicant) for data analysis and calculation with an adapted communication protocol between both softwares, and the monitoring system.

The solar monitoring technology of the previous patent application suffers different drawbacks related to the use of a RAOI element and in this regard the calibration of the IR cameras remains an important challenge.

The first drawback is related to the fact that the RAOI can hardly be considered as an ideal blackbody reference like those generally used in laboratory to calibrate IR cameras. It is due to the phenomenon of the degradation of the paint coating on the RAOI plate, which makes it difficult to estimate properly the emittance of the plate and therefore to reliably estimate the temperature of the plate with the IR cameras.

Another problem not taken in consideration in the previous patent and affecting the proper evaluation of the atmospheric transmittance with the RAOI, in addition to the plate's coating degradation, is the complexity to get reliable temperature measurement from the thermocouples located at the back of the plate. It is due to the difficulty to get good contact between the RAOI plate and the thermocouples, to the usual presence of a lot of wind at this location and to the fact that the thermocouples are heated through the RAOI by conduction, the solar flux impinging the other face of the RAOI. These factors could indeed lead to poor assessment of the RAOI temperature necessary to correct the raw data obtained by the IR cameras.

Moreover, the use of these RAOI plates does not allow to estimate the evolution of the emittance of the paint coating on the tubes of the solar receiver, which is also an important parameter in order to measure a temperature properly with IR cameras.

Finally, as a secondary additional improvement, there was a desire to avoid the use of a software dependent of the IR camera manufacturer and to incorporate all the calibration functions into a single in-house software.

## Aims of the Invention

The present invention aims, by improving the calibration of the IR cameras, at contributing to provide a solution automatically adapted to each site conditions for ensuring the integrity of the solar receiver's panel tubes, by avoiding excessive thermo-mechanical loading on the tubes which compose the receiver surface or other dangerous phenomena, during all the phases of operation.

In particular the invention aims at taking into account, while performing the calibration of the IR cameras, the variation of atmospheric transmittance throughout the day and the degradation of the paint coating on the tubes (i.e. its real emittance) of the solar receiver.

Another aim of the present invention is to make the monitoring more easily adaptable for each site, independently of the IR camera provider present on site.

## Summary of the Invention

A first aspect of the present invention relates to a thermal mapping, calibration and monitoring system for an outdoor thermal zone of interest, comprising :

- the thermal zone of interest having a front side irradiated by a solar flux and a non-irradiated back side ;

- a plurality of IR detection cameras presenting a field of vision and located each remotely from the thermal zone of interest;

- a weather station located on site providing weather parameters ;

- a monitoring system ; and

- communicating means between the IR detection cameras and the monitoring system ;

wherein the system comprises means to communicate raw temperatures $T_{raw}$ measured by the IR cameras on the thermal zone of interest to the monitoring system and further calibrate the measurements in the monitoring system by taking into account the atmospheric transmittance $\tau$ and also the real emittance $\varepsilon$ of the thermal zone of interest to correct the raw temperatures $T_{raw}$, before using the corrected values in further monitoring calculations.

According to preferred embodiments, the system comprises one of the following characteristics or a suitable combination thereof:

- the thermal zone of interest is a molten salt solar receiver of a concentrated solar power plant and on which thermocouples are placed to measure the salt temperature respectively at the salt entry and exit of each panel of the solar receiver;

- the weather station is able to provide at least the direct normal irradiation, the ambient temperature, the relative humidity and the wind speed and direction, the relative humidity and the ambient temperature being used to calculate the atmospheric transmittance.

A second aspect of the present invention relates to a method for calibrating IR cameras used for monitoring an outdoor thermal zone of interest such as a molten salt solar receiver of a concentrated solar power plant, using the thermal mapping, calibration and monitoring system as described above, comprising the following steps :

- acquiring raw temperatures $T_{raw}$ that are communicated by the IR cameras to the monitoring system ;

- calculating the atmospheric transmittance parameter $\tau$ based on the relative humidity and ambient temperature measured by the weather station on site ;

- calculating the emittance parameter $\varepsilon$ of the thermal zone of interest;

- converting the raw temperatures $\boldsymbol{T_{raw}}$ acquired by the IR cameras during plant operation into radiance $\boldsymbol{Rad_m}$ , using integrated Planck's equation

- applying a calibration factor to obtain corrected radiance $\boldsymbol{Rad_{cor}}$ according to the following equation :

$$\boldsymbol{Rad_{cor}} = \frac{Rad_m}{\varepsilon * \tau} ;$$

- converting of said corrected radiance $\boldsymbol{Rad_{cor}}$ back to temperature $\boldsymbol{T_{cam}}$, said temperature being calibrated.

According to preferred embodiments, the method comprises one of the following characteristics or a suitable combination thereof:

- the emittance parameter is calculated on site while respecting the following conditions during operation :

  • ensuring circulation of salt in the solar receiver ;

  • ensuring that no solar flux is impinging on the solar receiver ;

  • launching the calibration only if wind speed values received from the weather station are below a minimum threshold ;

  • launching the calibration only if the variation of the $\boldsymbol{T_{raw(x,y)}}$ measured in every cell of the solar receiver does not exceed a maximum threshold during a certain duration ;

- atmospheric transmittance is calculated using the following equations :

$$h = f_1(T_{atm}, w, l) \ [\frac{mm}{km}]$$

$$\tau = f_2(h) \ [-]$$

where :

  • $h$ is the corresponding height of water cylinder [mm/km],
  • $\tau$ is the atmospheric transmittance [-],
  • $T_{atm}$ is the ambient temperature [°C],
  • $l$ is the distance between the solar receiver and the cameras [km],
  • w is the relative humidity [-], and
  • $f_1$ and $f_2$ are corresponding functions of the respective parameters ;

- $l$ is comprised between 150 and 350m ;
- in case the solar receiver is made of at least one panel comprising a plurality of heat exchanger tubes, prior to calculate the emittance parameter, the monitoring system firstly calculates the average temperature of the salt in each panel of the receiver $T_{salt\,average,panel} = \dfrac{(T_{salt\,in,panel} + T_{salt\,out,panel})}{2}$ and, by assuming that the exchange tubes have the same temperature as the salt flowing inside them, due to the given conditions as above, the emittance parameter in each cell is calculated by comparing the real radiation $Rad_{measured}$ emitted by the tubes and measured by the cameras, based on $T_{raw(x,y)}$ and the theoretical radiation that would be emitted by the tubes $Rad_{blackbody}$ as if they were a blackbody, based on $T_{salt\,average,panel}$ calculated for each panel, the emittance parameter $\varepsilon$ being obtained in each cell by the ratio :

$$\frac{Rad_{measured}}{Rad_{blackbody}}$$

- in the step of conversion of the raw temperatures $T_{raw}$ acquired by the IR cameras during plant operation into radiance $Rad_m$, the following equations are used :

$$Rad_m = f_3(T_{raw}) \qquad \text{if } T_{raw} < T_{threshold,a}$$

$$Rad_m = f_4(T_{raw}) \qquad \text{if } T_{raw} \geq T_{threshold,a}$$

where

- $T_{raw}$ is the raw measurement communicated by the IR camera [°C] ;
- $Rad_m$ is the equivalent radiance coming from the tubes based on $T_{raw}$ [W/m$^2$/sr] ;
- $f_3$ and $f_4$ are different functions of $T_{raw}$ ;
- $T_{threshold,a}$ is a threshold for $T_{raw}$ used to determine which of both equations is most accurate to calculate the equivalent radiance [°C].

- in the step of conversion of said corrected radiance $Rad_{cor}$ back to temperature $T_{cam}$, said temperature being calibrated, the following equations are used

$$T_{cam} = f_5(Rad_{cor}) \qquad \text{if } Rad_{cor} < Rad_{threshold}$$

$$T_{cam} = f_6(Rad_{cor}) \qquad \text{if } Rad_{cor} \geq Rad_{threshold}$$

where

- $T_{cam}$ is the average external front side temperature of the tubes [°C] ;
- $f_5$ and $f_6$ are different functions of $Rad_{cor}$ ; and
- $Rad_{threshold}$ is a threshold for $Rad_{cor}$ used to determine which equation is most accurate to calculate the equivalent temperature [°C].

A third aspect of the invention relates to a data processing apparatus comprising means for carrying out the method described above.

A fourth aspect of the invention relates to a computer program comprising instructions which, when the program is executed by a computer, cause the computer to carry out the method described above, when the computer is part of the monitoring system in communication with the IR detection cameras located each remotely from the thermal zone of interest.

A fifth aspect of the invention relates to a non-transitory computer-readable medium having stored thereon the instructions of the program described above.

## Brief Description of the Drawings

FIG. 1 represents an example of ground positioning of a set of IR cameras around a solar tower.

FIG. 2 represents a view with an IR camera ground positioning relatively to the position of the solar tower and of the heliostat field.

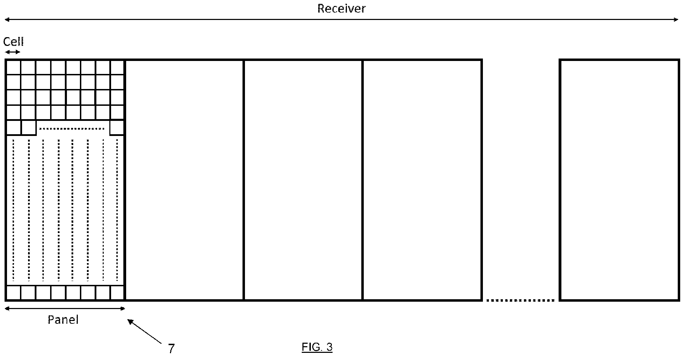

FIG. 3 schematically represents a solar receptor with its two levels or resolution : panel and cell.

## Description of a Preferred Embodiment of the invention

### Hardware

In addition to the hardware already included in the above-mentioned previous patent (IR cameras, salt mass flow meters, salt thermocouples), the monitoring system now also gathers information coming from new hardware (so not present in the former patent) :

-    thermocouples placed at the backside of the tubes of the solar receiver (not used in this application) ;
-    weather station information.

The software of the monitoring system is now capable to calibrate itself the measurement coming from the IR cameras to consider new phenomena such as the degradation of the paint coating on the tubes and the variation of atmospheric transmittance throughout the day.
The calibration of the IR cameras is now performed by a single in-house made software (the same as the one performing monitoring of the solar receiver) and thus a camera calibration dedicated software provided by the camera manufacturer is not needed anymore.

### Weather station

Some information measured by a weather station located on site is received by the monitoring system. Preferably, the parameters received are the followings:

-    Direct normal irradiation, or DNI (W/m2) ;

-    Ambient temperature (°C) ;

-    Relative humidity (%) ;

-    Wind speed (m/s) ; and

-    Wind direction (°).

### Software

As in the previous patent, the main goal of the software developed in-house is to collect the data coming from all the hardware (including tube backside thermocouples and weather station), to analyze it and to potentially request an action to ensure the solar receiver's safety.
Generally, the software integrates several new features in comparison with its first version :

-    ensuring the receiver's safety during all the phases of operation, and not only during hot salt production as in its previous version ;

-    monitoring of new phenomena, in addition to strain monitoring already included in the first version ; the system now also allows to prevent corrosion, fatigue, unbalanced temperature within a panel and salt freezing in the tubes ;

-    assuring protection regarding potential failure of a part of the hardware used, based on the measurement range and variation ;

- providing adaptation to site conditions : consideration of the evolution of atmospheric transmittance during the day and consideration of the actual state of the paint coating on the tubes (in terms of emittance calibration) in the IR cameras measurement.

This latter feature is particularly described below and constitutes the object of the present application.

### Calibration of $T_{cam(x,y)}$

Raw temperatures (also noted $T_{raw}$) are communicated by the IR cameras to the monitoring system. The temperatures are first calibrated by the software according to the invention to take into account the atmospheric transmittance and the real emittance of the tubes before being used by the software in the calculations. Both parameters, which are indeed important to consider in order to obtain accurate measurements with infrared cameras, are defined here below.

The **atmospheric transmittance** is the ratio, comprised between 0 and 1, of the transmitted radiation seen by the camera that has not been absorbed by the atmosphere located between the observed object and the camera to the total radiation emitted by the object. Since the distance between the solar receiver and the cameras is important (possibly more than 200m), this parameter has a significant impact on the camera measurements.

The **emittance** parameter represents the fraction, comprised between 0 and 1, of the real radiation emitted by the object at a determined temperature to the radiation emitted by a blackbody at the same temperature. In this case, the emittance of the tubes of the solar receiver depends mainly on the state of the black coating applied on the external surface of the tubes (thus facing the impinging solar flux) and on a potential presence of dust or dirt on them.

The monitoring system, which firstly receives values of $T_{raw(x,y)}$ [note that x, y are the 2D coordinates of a point on the surface of the panel] measured by the hardware considering both emittance and atmospheric transmittance at a value of 1, is able to recalculate values reflecting at the most it can the real conditions on site for both parameters. More concretely, the system can calculate and consider one value of emittance per panel cell (e.g. 10cm x 10cm) and one value of transmittance for the whole receiver (for a cell definition, see FIG. 4).

Advantageously, the calculation of the **atmospheric transmittance** parameter is performed at every calculation loop launched by the software and is based on the relative humidity and ambient temperature measured by the weather station on site.

According to the present invention, the equations used are of the following type:

$$h = f_1(T_{atm}, w, l) \ [\frac{mm}{km}]$$

$$\tau = f_2(h) \ [\text{-}]$$

where :

$h$ is the corresponding height of water cylinder [mm/km] (see Gaussorgues G.: Infrared Thermography. Springer Science+Business Media, B.V., Dordrecht 1994, ISBN 978-94-010-4306-9) ;

- $\tau$ is the atmospheric transmittance [-] ;
- $T_{atm}$ is the ambient temperature [°C] ;
- $l$ is the distance between the tower and the cameras [km] ;
- $w$ is the relative humidity [-] ; and
- $f_1$ and $f_2$ are respective functions empirically determined by the inventors (some part of the function may be for example a polynomial regression) on the basis of a significant number of collected data.

To calculate the **emittance** parameter, following conditions need to be respected on site during the operation :

- circulation of salt in the solar receiver ;

- no solar flux on the solar receiver;

- low wind on site (criteria monitored by the system, launching the calibration only if wind values received from the weather station is below a maximum threshold) ;

- stability of the temperatures $T_{raw(x,y)}$ measured by the infrared cameras (criteria monitored by the system, launching the calibration only if the variation of the $T_{raw(x,y)}$ measured in every cell does not exceed a maximum threshold during a certain duration).

With these conditions fulfilled, the monitoring system first calculates the average temperature of the salt (measured by thermocouples which are not shown) in each panel (

$$T_{salt\ average,panel} = \frac{(T_{salt\ in,panel} + T_{salt\ out,panel})}{2}$$

). By considering that the tubes have the same temperature as the salt flowing inside them (in particular due to the given conditions explained above), the emittance parameter in each cell is calculated by comparing the real radiation emitted by the tubes and measured by the cameras (based on $T_{raw(x,y)}$) and the theoretical radiation that would be emitted by the tubes if they were a blackbody (based on $T_{salt\ average,panel}$ calculated for each panel).

To calculate these in-band radiances, Planck equation integrated over finite spectral range is used : $Rad_{measured}$ and $Rad_{blackbody}$ (in Wm$^{-2}$sr$^{-1}$) are proportional to the fourth power of $T_{raw(x,y)}$ and $T_{salt\ average,panel}$ respectively, as it is well-known of the skilled person.

Once both radiances are determined, the emittance parameter is calculated in each cell:

$$\varepsilon = \frac{Rad_{measured}}{Rad_{blackbody}}$$

During plant operation, the temperatures communicated by the IR cameras are then advantageously calibrated with the following procedure.

1) Conversion of the raw temperatures acquired by the IR cameras into radiance with the following equations, depending on $T_{raw}$ value:

$$Rad_m = f_3(T_{raw}) \qquad \text{if } T_{raw} < T_{threshold,a}$$

$$Rad_m = f_4(T_{raw}) \qquad \text{if } T_{raw} \geq T_{threshold,a}$$

where

- $T_{raw}$ is the raw measurement communicated by the IR camera [°C] ;
- $Rad_m$ is the equivalent radiance coming from the tubes based on $T_{raw}$ [W/m$^2$/sr] ;
- $T_{threshold,a}$ is a threshold for $T_{raw}$ defined by the inventors and used to determine which equation is most accurate to calculate the equivalent radiance [°C] ; and
- $f_3$ and $f_4$ are respective functions empirically determined by the inventors (some part of the function may be for example a polynomial regression) on the basis of a significant number of collected data.

2) Application of the calibration factors :

$$Rad_{cor} = \frac{Rad_m}{\varepsilon * \tau}$$

where $Rad_{cor}$ is the calibrated radiance considering the emittance of the tube $\varepsilon$ on the corresponding cell and the atmospheric transmittance $\tau$, both determined by the software [W/m$^2$/sr].

3) Conversion of the radiance back to temperature :

$$T_{cam} = f_5(Rad_{cor}) \qquad \text{if } Rad_{cor} < Rad_{threshold}$$

(continued)

$$T_{cam} = f_6(Rad_{cor}) \qquad \text{if } Rad_{cor} \geq Rad_{threshold}$$

where

- $T_{cam}$ is the average external front side temperature of the tube [°C] ;
- $Rad_{threshold}$ is a threshold for $Rad_{cor}$ defined by the inventors and used to determine which equation is most accurate to calculate the equivalent temperature [°C] ; and
- $f_5$ and $f_6$ are respective functions empirically determined by the inventors (some part of the function may be for example a polynomial regression) on the basis of a significant number of collected data.

Obtained calibrated $T_{cam}$ is then used for further calculation in the monitoring system.

Symbols of reference

1    CSP tower plant
2    Solar receiver (tubes)
3    Heliostat field
4    Infrared camera
5    Field of view
7    Different levels of resolution in solar receiver (panel, cell)
11   Weather station

**Claims**

1. A thermal mapping, calibration and monitoring system for an outdoor thermal zone of interest, comprising :

   - the thermal zone of interest having a front side irradiated by a solar flux and a non-irradiated back side ;
   - a plurality of IR detection cameras presenting a field of vision and located each remotely from the thermal zone of interest;
   - a weather station located on site providing weather parameters ;
   - a monitoring system ; and
   - communicating means between the IR detection cameras and the monitoring system ;

   wherein the system comprises means to communicate raw temperatures $T_{raw}$ measured by the IR cameras on the thermal zone of interest to the monitoring system and further calibrate the measurements in the monitoring system by taking into account the atmospheric transmittance $\tau$ and also the real emittance $\varepsilon$ of the thermal zone of interest to correct the raw temperatures $T_{raw}$, before using the corrected values in further monitoring calculations.

2. The system according to claim 1, wherein the thermal zone of interest is a molten salt solar receiver of a concentrated solar power plant and on which thermocouples are placed to measure the salt temperature respectively at the salt entry and exit of each panel of the solar receiver.

3. The system according to claim 1, wherein the weather station is able to provide at least the direct normal irradiation, the ambient temperature, the relative humidity and the wind speed and direction, the relative humidity and the ambient temperature being used to calculate the atmospheric transmittance.

4. A method for calibrating IR cameras used for monitoring an outdoor thermal zone of interest such as a molten salt solar receiver of a concentrated solar power plant, using the thermal mapping, calibration and monitoring system according to anyone of the preceding claims, comprising the following steps :

   - acquiring raw temperatures $T_{raw}$ that are communicated by the IR cameras to the monitoring system ;
   - calculating the atmospheric transmittance parameter $\tau$ based on the relative humidity and ambient temperature measured by the weather station on site ;

- calculating the emittance parameter $\varepsilon$ of the thermal zone of interest;
- converting the raw temperatures $T_{raw}$ acquired by the IR cameras during plant operation into radiance $Rad_m$, using integrated Planck's equation ;
- applying a calibration factor to obtain corrected radiance $Rad_{cor}$ according to the following equation :

$$Rad_{cor} = \frac{Rad_m}{\varepsilon * \tau} \; ;$$

- converting said corrected radiance $Rad_{cor}$ back to temperature $T_{cam}$, said temperature being the calibrated temperature.

5. The method of claim 4, wherein the emittance parameter is calculated on site while respecting the following conditions during operation :

- ensuring circulation of salt in the solar receiver;
- ensuring that no solar flux is impinging on the solar receiver ;
- launching the calibration only if wind speed values received from the weather station are below a minimum threshold ;
- launching the calibration only if the variation of the $T_{raw(x,y)}$ measured in every cell of the solar receiver does not exceed a maximum threshold during a certain duration.

6. The method according to claim 4, wherein atmospheric transmittance is calculated using the following equations :

$$h = f_1(T_{atm}, w, l) \; [\frac{mm}{km}]$$

$$\tau = f_2(h) \; [\text{-}]$$

where :

- $h$ is the corresponding height of water cylinder [mm/km],
- $\tau$ is the atmospheric transmittance [-],
- $T_{atm}$ is the ambient temperature [°C],
- $l$ is the distance between the solar receiver and the cameras [km],
- w is the relative humidity [-], and
- $f_1$ and $f_2$ are corresponding functions of the respective parameters.

7. The method according to claim 6, wherein $l$ is comprised between 150 and 350m.

8. The method according to claim 4 or 5, wherein, in case the solar receiver is made of at least one panel comprising a plurality of heat exchanger tubes, prior to calculate the emittance parameter, the monitoring system firstly calculates the average temperature of the salt in each panel of the receiver $T_{salt\ average,panel} = \frac{(T_{salt\ in,panel} + T_{salt\ out,panel})}{2}$ and by assuming that the exchange tubes have the same temperature as the salt flowing in them, due to the given conditions of claim 5, the emittance parameter in each cell is calculated by comparing the real radiation $Rad_{measured}$ emitted by the tubes and measured by the cameras, based on $T_{raw(x,y)}$ and the theoretical radiation that would be emitted by the tubes $Rad_{blackbody}$ as if they were a blackbody, based on $T_{salt\ average,panel}$ calculated for each panel, the emittance parameter $\varepsilon$ being obtained in each cell by the ratio :

$$\frac{Rad_{measured}}{Rad_{blackbody}}$$

9. The method according to claim 4 or 5, wherein, in the step of conversion of the raw temperatures $T_{raw}$ acquired by the IR cameras during plant operation into radiance $Rad_m$, the following equations are used :

$$Rad_m = f_3(T_{raw}) \qquad \text{if } T_{raw} < T_{threshold,a}$$

$$Rad_m = f_4(T_{raw}) \qquad \text{if } T_{raw} \geq T_{threshold,a}$$

where

- $T_{raw}$ is the raw measurement communicated by the IR camera [°C] ;
- $Rad_m$ is the equivalent radiance coming from the tubes based on $T_{raw}$ [W/m$^2$/sr] ;
- $f_3$ and $f_4$ are different functions of $T_{raw}$ ;
- $T_{threshold,a}$ is a threshold for $T_{raw}$ used to determine which of both equations is most accurate to calculate the equivalent radiance [°C].

10. The method according to claim 4 or 5, wherein, in the step of conversion of said corrected radiance $Rad_{cor}$ back to temperature $T_{cam}$, said temperature being calibrated, the following equations are used

$$T_{cam} = f_5(Rad_{cor}) \qquad \text{if } Rad_{cor} < Rad_{threshold}$$

$$T_{cam} = f_6(Rad_{cor}) \qquad \text{if } Rad_{cor} \geq Rad_{threshold}$$

where

- $T_{cam}$ is the average external front side temperature of the tubes [°C] ;
- $f_5$ and $f_6$ are different functions of $Rad_{cor}$ ; and
- $Rad_{threshold}$ is a threshold for $Rad_{cor}$ used to determine which equation is most accurate to calculate the equivalent temperature [°C].

11. A data processing apparatus comprising means for carrying out the method according to anyone of claims 4 to 10.

12. A computer program comprising instructions which, when the program is executed by a computer, cause the computer to carry out the method according to anyone of claims 4 to 10, when the computer is part of the monitoring system in communication with the IR detection cameras located each remotely from the thermal zone of interest.

13. A non-transitory computer-readable medium having stored thereon the instructions of the program according to claim 12.

FIG.1

FIG.2

FIG. 3

Europäisches
Patentamt

European
Patent Office

Office européen
des brevets

# EUROPEAN SEARCH REPORT

**Application Number**

EP 23 21 9478

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/386211 A1 (DETHIER ALFRED [BE] ET AL) 10 December 2020 (2020-12-10) * figures 1,4,5 * | 1-13 | INV. G01J5/00 F24S50/40 G01J5/80 |
| A | US 2019/219450 A1 (DUBBS TIM PATRICK [US] ET AL) 18 July 2019 (2019-07-18) * paragraphs [0033] - [0035]; figure 4 * | 1-13 | |
| A | Flir System's Inc: "IR Automation Guidebook: Temperature Monitoring and Control with IR Cameras", , 1 January 2008 (2008-01-01), pages 1-61, XP055105963, Retrieved from the Internet: URL:http://www.automation.com/pdf_articles /Automation_Guidebook.pdf [retrieved on 2014-03-06] * figure 14 * | 1-13 | |
| A | US 2010/006087 A1 (GILON YOEL [IL] ET AL) 14 January 2010 (2010-01-14) * paragraphs [0064], [0068]; figure 6 * | 1-13 | TECHNICAL FIELDS SEARCHED (IPC) G01J F24S |

The present search report has been drawn up for all claims

| Place of search | Date of completion of the search | Examiner |
|---|---|---|
| Munich | 14 May 2024 | Rödig, Christoph |

EPO FORM 1503 03.82 (P04C01)

## ANNEX TO THE EUROPEAN SEARCH REPORT
## ON EUROPEAN PATENT APPLICATION NO.

EP 23 21 9478

This annex lists the patent family members relating to the patent documents cited in the above-mentioned European search report.
The members are as contained in the European Patent Office EDP file on
The European Patent Office is in no way liable for these particulars which are merely given for the purpose of information.

14-05-2024

| Patent document cited in search report | | | Publication date | Patent family member(s) | | | Publication date |
|---|---|---|---|---|---|---|---|
| US 2020386211 | A1 | | 10-12-2020 | AU | 2018242110 | A1 | 19-09-2019 |
| | | | | CL | 2019002615 | A1 | 06-12-2019 |
| | | | | CN | 108917205 | A | 30-11-2018 |
| | | | | EP | 3601900 | A1 | 05-02-2020 |
| | | | | ES | 2878098 | T3 | 18-11-2021 |
| | | | | IL | 269575 | A | 28-11-2019 |
| | | | | KR | 20190132412 | A | 27-11-2019 |
| | | | | MA | 49271 | A | 05-02-2020 |
| | | | | PE | 20191594 | A1 | 04-11-2019 |
| | | | | US | 2020386211 | A1 | 10-12-2020 |
| | | | | WO | 2018177696 | A1 | 04-10-2018 |
| US 2019219450 | A1 | | 18-07-2019 | DE | 102017205581 | A1 | 05-10-2017 |
| | | | | GB | 2548998 | A | 04-10-2017 |
| | | | | US | 2017284869 | A1 | 05-10-2017 |
| | | | | US | 2019219450 | A1 | 18-07-2019 |
| US 2010006087 | A1 | | 14-01-2010 | NONE | | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018177696 A1

**Non-patent literature cited in the description**

- **GAUSSORGUES G.** Infrared Thermography. Springer Science+Business Media, 1994